(19) **Europäisches Patentamt**
**European Patent Office**
**Office européen des brevets**

(11) **EP 1 327 290 B1**

(12) **EUROPÄISCHE PATENTSCHRIFT**

(45) Veröffentlichungstag und Bekanntmachung des Hinweises auf die Patenterteilung:
**08.12.2010 Patentblatt 2010/49**

(21) Anmeldenummer: **01980477.2**

(22) Anmeldetag: **04.10.2001**

(51) Int Cl.:
***H02H 9/00*** *(2006.01)*

(86) Internationale Anmeldenummer:
**PCT/EP2001/011452**

(87) Internationale Veröffentlichungsnummer:
**WO 2002/031941 (18.04.2002 Gazette 2002/16)**

(54) **SCHALTUNGSANORDNUNG ZUM ÜBERWACHEN UND/ODER ZUM EINSTELLEN VON VERSORGUNGSSPANNUNGEN**

CIRCUIT CONFIGURATION FOR MONITORING AND/OR REGULATING SUPPLY VOLTAGES

ENSEMBLE CIRCUIT POUR SURVEILLER ET/OU REGLER DES TENSIONS D'ALIMENTATION

(84) Benannte Vertragsstaaten:
**AT BE CH CY DE DK ES FI FR GB GR IE IT LI LU MC NL PT SE TR**

(30) Priorität: **10.10.2000 DE 10049994**

(43) Veröffentlichungstag der Anmeldung:
**16.07.2003 Patentblatt 2003/29**

(73) Patentinhaber: **Endress + Hauser GmbH + Co. KG**
**79689 Maulburg (DE)**

(72) Erfinder:
• **STRÜTT, Bernd**
**79585 Steinen (DE)**

• **STEINEBRUNNER, Edwin**
**79674 Todtnau (DE)**

(74) Vertreter: **Andres, Angelika Maria et al**
**Endress+Hauser (Deutschland) AG+Co. KG PatServe**
**Colmarer Strasse 6**
**79576 Weil am Rhein (DE)**

(56) Entgegenhaltungen:
**GB-A- 2 253 956     US-A- 4 589 049**
**US-A- 4 849 845     US-A- 5 694 283**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Schaltungsanordnung zum Überwachen und/oder zum Einstellen, insb. zum Begrenzen, von wenigsten zwei Versorgungsspannungen für Verbraucher-Schaltungen.

Elektronische Verbraucher-Schaltungen, insb. solche, die in brand- und/oder explosionsgefährdeten Bereichen eingesetzt werden, sind üblicherweise mittels Spannungsbegrenzer vor Überhöhungen eingangs angelegter Spannungen geschützt, also vor Überspannungen, die die für jeweilige Schaltung zugelassene Spannungshöhe übersteigen würden.

Als Spannungsbegrenzer werden häufig Schaltungsanordnungen verwendet, die wenigstens ein im Nebenschluß zur Eingangsspannung einer nachfolgenden Verbraucher-Schaltung liegendes Halbleiter-Element von veränderbarem ohmischen Widerstand aufweisen.

So sind z.B. in den US-A 45 89 049 und US-A 48 49 845 Schaltungsanordnungen zum Überwachen und/oder Einstellen, insb. Begrenzen, einer Versorgungsspannung für eine nachfolgende Verbraucher-Schaltung beschrieben, welche Schaltungsanordnung umfaßt:

- eine auf die Versorgungsspannung reagierende Spannungsüberwachungs-Elektronik zum Erzeugen eines Steuersignals, das signalisiert, ob die Versorgungsspannung niedriger als ein zugeordneter Toleranzwert ist
- eine vom Steuersignal angesteuerte Nebenschluß-Elektronik mit wenigstens einem Halbleiter-Element zum Einstellen und Führen eines von der Versorgungsspannung getriebenen Shuntstroms,

    -- wobei die Versorgungsspannung zumindest teilweise über der Nebenschluß-Elektronik abfällt und
    -- wobei der Shuntstrom zumindest dann durch die Nebenschluß-Elektronik fließt, wenn das Steuersignal signalisiert, daß die Versorgungsspannung größer als der Toleranzwert ist.

Bei der Verwendung derartiger, als aktive Spannungsbegrenzer dienender Schaltungsanordnungen für elektronische Verbraucher-Schaltungen, die in brand- und/oder explosionsgefährdeten Bereichen eingesetzt werden, insb. in solchen Schaltungen, die den Europäischen Normen EN 50019 und/oder EN 50020 genügen sollen, sind zumindest die spannungsbegrenzenden Nebenschlüsse aufgrund der geforderten erhöhten (Ex-e) oder intrinsischen (Ex-i) Sicherheit hinsichtlich Strombelastungsfähigkeit und/oder Spannungsfestigkeit oftmals redundant, z.B. durch eine mehrfache Kaskadierung, auszuführen.

Dies wiederum führt zwangsläufig zu einem erhöhten Bauelemente- und/oder Verdrahtungsaufwand, der üblicherweise auch mit einem erhöhten Platzbedarf solcher Spannungsbegrenzer einhergeht.

Ein Aufgabe der Erfindung besteht daher darin, den Schaltungsaufwand für einen derartigen Spannungsbegrenzer, insb. den Schaltungsaufwand für den spannungsbegrenzenden Nebenschluß, zu reduzieren.

Zur Lösung der Aufgabe besteht die Erfindung in einer Schaltungsanordnung zum Überwachen und/oder Einstellen wenigstens einer ersten mittels einer ersten Einspeisung erzeugten Versorgungsspannung für eine an einem ersten Ausgang der Schaltungsanordnung angeschlossene ersten Verbraucher-Schaltung und wenigstens einer zweiten mittels einer zweiten Einspeisung erzeugten Versorgungsspannung für eine an einem zweiten Ausgang der Schaltungsanordnung angeschlossene zweite Verbraucher-Schaltung, welche Schaltungsanordnung umfaßt:

- eine auf wenigstens die erste Versorgungsspannung reagierende Spannungsüberwachungs-Elektronik zum Erzeugen eines Steuersignals, das signalisiert, ob die erste Versorgungsspannung niedriger als ein zugeordneter erster Toleranzwert ist und
- eine Nebenschluß-Elektronik, die zumindest zeitweise von einem Shuntstrom durchflossen ist,
- wobei der Shuntstrom

    -- von der ersten und von der zweiten Einspeisung gespeist wird und
    -- zumindest dann durch die Nebenschluß-Elektronik fließt, wenn das Steuersignal signalisiert, daß mindestens die erste Versorgungsspannung größer als der erste Toleranzwert ist.

Nach einer ersten bevorzugten Ausgestaltung der Erfindung reagiert die Spannungsüberwachungs-Elektronik auch auf die wenigstens zweite Versorgungsspannung und signalisiert das Steuersignals, ob die zweite Versorgungsspannung niedriger als ein zugeordneter zweiter Toleranzwert ist.

Nach einer zweiten bevorzugten Ausgestaltung der Erfindung umfaßt die Nebenschluß-Elektronik wenigstens ein steuerbares Halbleiter-Element.

Nach einer dritten bevorzugten Ausgestaltung der Erfindung wird mittels des Steuersignals eine Leitfähigkeit des Halbleiter-Elements eingestellt.

Nach einer vierten bevorzugten Ausgestaltung der Erfindung umfaßt die Schaltungsanordnung Mittel zum Getrennthalten von Potentialen der ersten und der zweiten Versorgungsspannungen.

Nach einer fünften bevorzugten Ausgestaltung der Erfindung liefert die erste Einspeisung eine erste Klemmenspannung zum Einstellen der ersten Versorgungsspannung liefert und reagiert die erste Einspeisung auf ein Ansteigen des Shuntstroms mit einem Absenken der ersten Klemmenspannung.

Nach einer sechsten bevorzugten Ausgestaltung der Erfindung signalisiert das Steuersignal, inwieweit die erste Versorgungsspannung höher als der erste Toleranzwert ist.

Nach einer siebenten bevorzugten Ausgestaltung der Erfindung ist wenigstens die erste Verbraucherschaltung von intrinsischer und/oder erhöhter Sicherheit.

Die Erfindung beruht dabei auf der Erkenntnis der Erfinder, daß bei einer mittels solcher Leitungen mehrfach gespeisten, z.B. bei an einen Datenbus angeschlossenen, elektronischen Schaltung im Fehlerfall, insb. bei einer Überspannung auch auf nur einer der Busleitungen, oftmals die gesamte Schaltung spannungslos zu machen ist, z.B. durch ein Abschalten oder ein Absenken der die Schaltung versorgenden Spannungen, da ein Weiterbetreiben von nicht an die fehlerhaften Busleitungen angeschlossenen Schaltungskomponenten nicht erforderlich oder aber nicht zulässig ist.

Ein Grundgedanke der Erfindung besteht darin, mehrere spannungsführende Leitungen mittels einer einzigen, im Nebenschluß jeder dieser Leitungen liegenden Schalteranordnung immer dann gleichzeitig auf ein niedrigeres Potential, z.B. ein Massepotential oder ein Erdpotential der die jeweilige Spannung liefernden Schaltungen, zu ziehen und somit nachfolgende Schaltungen praktisch spannungslos zu machen, wenn auf wenigstens einer der Leitungen eine Überspannung detektierbar ist.

Ein Vorteil der erfindungsgemäßen Schaltungsanordnungen besteht darin, daß durch deren Verwendung eingangs einer elektronischen Schaltung, insb. von intrinsischer und/oder erhöhter Sicherheit, der Bauelementeaufwand zur Realisierung der spannungsbegrenzenden Nebenschlüsse erheblich verringert werden kann. Es hat sich nämlich gezeigt, daß die zum Erreichen der geforderten Sicherheit notwendige Leistungsaufnahmefähigkeit der den Shuntstrom tragenden Halbleiter-Elemente, insb. deren Stromtragfähigkeit, erheblich geringer ausgelegt werden kann, als sich dies bei einer Lösung mit für jede Leitung separat ausgeführten Nebenschlüssen in Addition der dann notwendigen Leistungsaufnahmefähigkeit jedes einzelnen Halbleiter-Elements ergeben würde. Dies auch deshalb, weil bei der erfindungsgemäßen Schaltungsanordnungen das oder die Halbleiter-Elemente im Vergleich zur anderen Lösung effektiver gekühlt werden können. Des weiteren können zur Realisierung der Nebenschluß-Elektronik z.B. auch ohne Halbleiter-Elemente von höherer Genauigkeit und somit von üblicherweise höherem Einzelstückpreis verwendet werden, ohne in Summe die Kosten für die Schaltungsanordnung zu erhöhen.

Die Erfindung und weitere Vorteile werden nachfolgend anhand von Ausführungsbeispielen näher erläutert, die in den Figuren der Zeichnung dargestellt sind; gleiche Teile sind in den Figuren mit gleichen Bezugszeichen versehen. Falls es der Übersichtlichkeit dienlich ist, wird auf die Darstellung bereits vergebener Bezugszeichen in nachfolgenden Figuren verzichtet.

Fig. 1    zeigt ein Ausführungsbeispiel einer Schaltungsanordnung zum Begrenzen von Spannungen,

Fig. 2    zeigt ein anderes Ausführungsbeispiel einer Schaltungsanordnung zum Begrenzen von Spannungen und

ig. 3    zeigt ein Beispiel für eine kaskadierte Zusammenschaltung von mehreren Schaltungsanordnung zum Begrenzen von Spannungen.

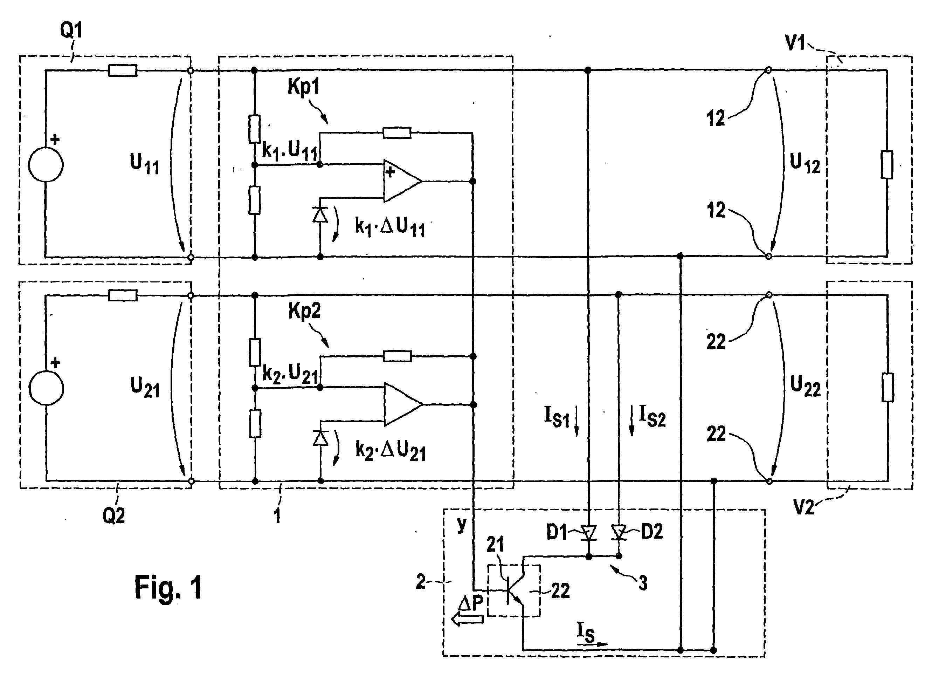

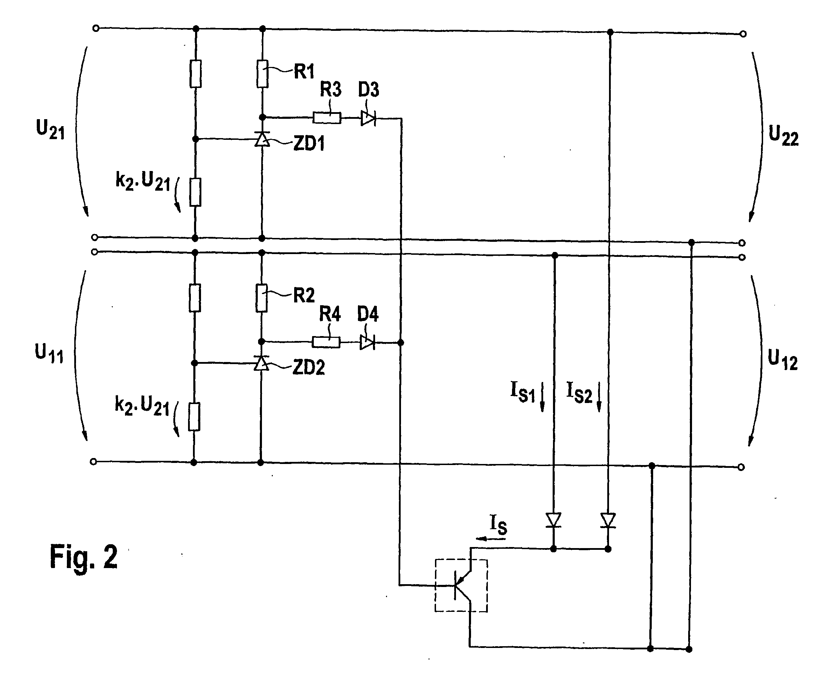

In den Fig. 1 und 2 ist jeweils ein Ausführungsbeispiel für eine Schaltungsanordnung schematisch dargestellt, die dazu dient, im Betrieb eine erste Versorgungsspannung $U_{12}$ für eine an einen ersten Ausgang 12 angeschlossene erste Verbraucher-Schaltung V1 und eine zweite Versorgungsspannung $U_{22}$ für eine an einen zweiten Ausgang 22 angeschlossene zweite Verbraucher-Schaltung V2 zu überwachen. Die Verbraucher-Schaltung V1, V2 können z.B. Transmitter-Schaltungen von Feldgeräten mit erhöhter (Ex-e) oder intrinsischer (Ex-i) Sicherheit sein.

Die Versorgungsspannung $U_{12}$, $U_{22}$ sind bevorzugt Gleichspannungen und werden, wie in der Fig. 1 dargestellt, von einer ersten Einspeisung Q1 bzw. von einer zweiten Einspeisung Q2 gelieferten und sind in den Ausführungsbeispielen gemäß den Fig. 1 und 2 praktisch gleich einer ausgangs der Einspeisungen Q1, Q2 abgreifbaren ersten Klemmenspannung $U_{11}$ bzw. zweiten Klemmenspannung $U_{21}$. Die Klemmenspannung $U_{11}$, $U_{21}$ und die entsprechenden Versorgungsspannungen $U_{12}$, $U_{22}$ können aber auch voneinander verschieden sein, z.B. aufgrund von Längsspannungsfällen entlang von zwischen den Einspeisungen Q1, Q2 und den jeweils zugehörigen Verbraucher-Schaltungen V1 bzw. V2 gezogenen Verbindungsleitungen.

Beide Klemmenspannung $U_{11}$, $U_{21}$ können neben einem jeweiligen Nennspannungsanteil auch einen Fehlerspannungsanteil, insb. eine Überspannung, aufweisen. Somit setzen sich auch die beiden Versorgungsspannungen $U_{12}$, $U_{22}$ aus einem als konstant anzunehmenden Spannungsanteil sowie aus einem als veränderlich, insb. nur temporär auftretend, anzunehmenden Spannungsanteil zusammen, nämlich einer Nennspannung $U_{n12}$ und einer Fehlerspannung $U_{f12}$ für die Versorgungsspannung $U_{12}$ sowie einer Nennspannung $U_{n22}$ und einer Fehlerspannung $U_{f22}$ für die

Versorgungsspannung $U_{22}$. Demgemäß kann für die Versorgungsspannungen $U_{12}$, $U_{22}$ folgende Beziehungen gelten:

$$U_{12} \leq U_{n12} + U_{f12} \quad bzw. \quad (1)$$

$$U_{22} \leq U_{n22} + U_{f22}.$$

Zum Überwachen der Versorgungsspannungen $U_{12}$, $U_{22}$ weist die Schaltungsanordnung gemäß der Fig. 1 eine entsprechende Spannungsüberwachungs-Elektronik 1 auf, die die Versorgungsspannungen $U_{12}$, $U_{22}$ im Betrieb erfaßt und in ein, Steuersignal y, z.B. eine binäre oder analoge Signalspannung, abbildet, das signalisiert, ob die Versorgungsspannung $U_{12}$ niedriger als ein dieser zugeordneter Toleranzwert $\Delta U_{12}$ und ob die Versorgungsspannung $U_{22}$ niedriger als ein zugeordneter Toleranzwert $\Delta U_{22}$ ist oder ob wenigstens eine der Versorgungsspannungen $U_{12}$, $U_{22}$ höher als der jeweils zugehörige Toleranzwert $\Delta U_{12}$ bzw. $\Delta U_{22}$ ist.

Der Toleranzwert $\Delta U_{12}$ ist so eingestellt, daß er größer oder gleich einem höchsten zu erwartenden Spannungspegel $Max\{U_{12}(U_{f12} = 0)\}$ der ungestörten Versorgungsspannung $U_{12}$ ist, bei der die Fehlerspannung $U_{f12}$ gleich null ist. Des weiteren ist der Toleranzwert $\Delta U_{12}$ so eingestellt, daß er kleiner als ein kleinster zu erwartender Spannungspegel $Min\{U_{12}(U_{f12} > 0)\}$ der gestörten Versorgungsspannung $U_{12}$ ist, bei der die Fehlerspannung $U_{f12}$ größer als null ist; der Toleranzwert $\Delta U_{22}$ ist bezüglich der Versorgungsspannung $U_{22}$ in analoger Weise einzustellen. Für die Toleranzwerte $\Delta U_{12}$, $\Delta U_{22}$ gilt somit:

$$Max\{U_{12}(U_{f12} = 0)\} \leq \Delta U_{12} < Min\{U_{12}(U_{f12} > 0)\} \quad bzw. \quad (2)$$

$$Max\{U_{22}(U_{f22} = 0)\} \leq \Delta U_{22} < Min\{U_{22}(U_{f22} > 0)\}.$$

Neben dem Erfassen der Versorgungsspannungen $U_{12}$, $U_{22}$ dient die Schaltungsanordnung außerdem dazu, die Versorgungsspannungen $U_{12}$, $U_{22}$ in ihrer Spannungshöhe zu begrenzen, und zwar so, daß diese den jeweils zugeordneten Toleranzwert $\Delta U_{12}$ bzw. $\Delta U_{22}$ nicht oder aber höchstens nur für eine Dauer von in etwa 100 ns überschreiten.

Zum Einstellen der Versorgungsspannungen $U_{12}$, $U_{22}$ umfaßt die Schaltungsanordnung ferner eine Nebenschluß-Elektronik 2 mit mindestens einem Halbleiter-Element, das in seiner Leitfähigkeit einstellbar ist und das, im Betrieb vom Steuersignal y angesteuert, diese Leitfähigkeit verändert.

Die Nebenschluß-Elektronik 2 wirkt zusammen mit den der Schaltungsanordnung nachfolgenden Verbraucher-Schaltungen V1, V2 als ein einstellbarer Stromteiler, bestehend aus einem veränderbaren Ausgangswiderstand für die Schaltungsanordnung und einem Eingangswiderstand für die Verbraucher-Schaltung V1 sowie einem Eingangswiderstand für die Verbraucher-Schaltung V2. Mittels der Nebenschluß-Elektronik 2 werden somit die über dieser abfallenden Versorgungsspannungen $U_{12}$, $U_{22}$, insb. für einen Fehlerfall, bei dem wenigstens eine der Versorgungsspannungen $U_{12}$, $U_{22}$ größer als der zugehörige Toleranzwert $\Delta U_{12}$ bzw. $\Delta U_{22}$ ist, in ihrer Höhe begrenzt oder wieder abgesenkt.

Ferner ist das Nebenschluß-Elektronik 2 zumindest zeitweise, insb. in vorbeschriebenem Fehlerfall, von einem Shuntstrom $I_S$ der Schaltungsanordnung durchflossen. Wie in Fig. 1 dargestellt, entspricht der Shuntstrom $I_S$ einer Stromsumme, die mittels eines von der Versorgungsspannung $U_{12}$ getriebenen ersten Teilstroms $I_{S1}$ und eines von der Versorgungsspannung $U_{22}$ getriebenen zweiten Teilstroms $I_{S2}$ gebildet ist. Der Shuntstrom $I_S$ dient insb. auch dazu, an der ersten und/oder an der zweiten Einspeisung Q1, Q2 den Strombedarf zu erhöhen und somit die Versorgungsspannung $U_{12}$ bzw. die Versorgungsspannung $U_{22}$ zumindest kurzzeitig abzusenken.

Die Nebenschluß-Elektronik 2 umfaßt, wie in Fig. 1 dargestellt, wenigstens eine im Nebenschluß der Ausgänge 12, 22 liegendes, steuerbares Halbleiter-Element 21, dem das Steuersignal y an eine entsprechende Steuerelektrode angelegt ist. Als Halbleiter-Element 21 kann z.B. ein Bipolar-Transistor oder auch ein Feldeffek-Transistor dienen. Falls erforderlich, kann das einzelne Halbleiter-Element 21 zur Verbesserung des Ansprechverhaltens der Nebenschluß-Elektronik 2 auf das Steuersignal y z.B. auch durch eine entsprechende Darlington-Schaltung mehrerer Transitoren ersetzt werden.

Zur Erhöhung ihrer Strombelastungsfähigkeit kann die Nebenschluß-Elektronik 2 außerdem mit einer entsprechenden Kühlanordnung 22, z.B. einem Kühlblech am Halbleiter-Element 21, versehen werden über die ein erheblicher

Anteil $\Delta P$ der vom Halbleiter-Element 21 aufgenommenen Leistung, deren Höhe z.B. nach der Beziehung $U_{12} \cdot I_{S1} + U_{22} \cdot I_{S2}$ abschätzbar ist, an die Umgebung abgegeben werden kann. Ferner kann die Leistungsaufnahmefähigkeit auch dadurch erhöht werden, das die Nebenschluß-Elektronik 2 anstelle eines einzigen Transistors eine Parallel-Schaltung zweier oder mehrer Transistoren, insb. von gleichem Typ, aufweist.

Wie in Fig. 1 dargestellt, weist die Schaltungsanordnung des weiteren Mittel 3 zum Getrennthalten von Potentialen auf, die dazu dienen, wenigstens ein Potential der Versorgungsspannung $U_{12}$ von wenigstens einem Potential der Versorgungsspannung $U_{22}$ getrennt zu halten.

Die Mittel 3 zum Getrennthalten von Potentialen umfassen im Ausführungsbeispiel gemäß Fig. 1 eine den zumindest zeitweise fließenden Teilstrom $I_{S1}$ führende erste Diode D1 für die Versorgungsspannung $U_{12}$ und eine den zumindest zeitweise fließenden Teilstrom $I_{S2}$ führende zweiten Diode D2 für die Versorgungsspannung $U_{22}$. Wie in Fig. 1 dargestellt, ist der Diode D1 über eine erste Elektrode ein Potential der Versorgungsspannung $U_{12}$ und der Diode D2 über deren erste Elektrode ein Potential der Versorgungsspannung $U_{22}$ angelegt, während die Dioden D1, D2 über ihre jeweils zweite Elektrode miteinander verbunden sind. Die Dioden D1, D2 sind dabei so geschaltet, daß daß sie in vorbeschriebenem Fehlerfall vom Teilstrom $I_{S1}$ bzw. $I_{S2}$ in Durchlaßrichtung durchflossen sind, daß aber ein Ladungsausgleich zwischen den beiden voneinander getrennt zu haltenden Potentialen der Versorgungsspannungen $U_{12}$, $U_{22}$ praktisch stets verhindert wird. Falls erforderlich kann anstelle einer einzigen Diode D1 bzw. D2 auch jeweils eine gleichwirkende Serienschaltung und/oder eine Parallelschaltung zweier oder mehrerer Dioden zur Potentialtrennung verwendet werden.

Nach einer bevorzugten Ausgestaltung der Erfindung ist die Spannungsüberwachungs-Elektronik 1, wie in Fig. 1 dargestellt, mittels eines ersten Komparators Kp1 für die Versorgungsspannung $U_{12}$ und mittels eines zweiten Komparators Kp2 für die Versorgungsspannung $U_{22}$ realisiert, wobei die Komparatoren Kp1, Kp2 ausgangsseitig miteinander verbunden sind. Zum Erfassen der Versorgungsspannungen $U_{12}$, $U_{22}$ werden zu diesen jeweils proportionale Teilspannungen $k_1 \cdot U_{12}$ bzw. $k_2 \cdot U_{22}$ an nicht-invertierende Eingänge jeweils eines Operationsverstärkers der Komparatoren Kp1, Kp2 angelegt. Des weiteren ist diesen Operationsverstärkern am jeweiligen invertierenden Eingang eine zum entsprechenden Toleranzwert $\Delta U_{12}$ oder $\Delta U_{22}$ proportionale Referenzspannung $k_1 \cdot \Delta U_{12}$ bzw. $k_2 \cdot \Delta U_{22}$ angelegt.

Da beide Komparatoren Kp1, Kp2 ausgangsseitig miteinander verbunden sind, liefert die Spannungsüberwachungs-Elektronik 1 eine als binäres Steuersignal y dienende Signalspannung, die einer logisch-disjunktive Verknüpfung der gleichfalls binären Ausgangsspannungen beider Komparatoren Kp1, Kp2 entspricht. Dementsprechend nimmt das Steuersignal y dann einen High-Pegel für logisch eins an, wenn die Ausgangsspannung des ersten und/oder des zweiten Komparators Kp1, Kp2 ebenfalls einen High-Pegel aufweist, d.h. wenn die Versorgungsspannung $U_{12}$ höher als der Toleranzwert $\Delta U_{12}$ ist und/oder wenn die Versorgungsspannung $U_{22}$ höher als der Toleranzwert $\Delta U_{22}$ ist; anderenfalls weist das Steuersignal y einen Low-Pegel für logisch null auf.

Bei dieser Ausgestaltung der Erfindung weist die Nebenschluß-Elektronik 2 im Nebenschluß der Ausgänge 12, 22 bevorzugt einen als steuerbares Halbleiter-Element 21 dienenden npn-Bipolartransistor auf, dem das Steuersignal y als Basis-Emitter-Spannung zugeführt ist.

Falls erforderlich können anstelle der Komparatoren Kp1, Kp2 auch solche Verstärkerschaltungen verwendet werden, die im Gegensatz zu binären Ausgangsspannungen z.B. analoge Ausgangsspannungen erzeugen, so daß die Spannungsüberwachungs-Elektronik 1 in entsprechender Weise ein ebenfalls analoges Steuersignal y liefert. Derartige Verstärkerschaltungen können in der dem Fachmann bekannten Weise z.B. als Proportionalverstärker oder auch als die Fehlerspannungen über Änderungen der Versorgungsspannungen $U_{12}$, $U_{22}$ erfassende Differentiatoren konfiguriert sein. Für letzteren Fall würden die Toleranzwerte $\Delta U_{12}$, $\Delta U_{22}$ dementsprechend eine Referenz für zeitliche Spannungsänderungen repräsentieren.

Nach einer weiteren bevorzugten Ausgestaltung der Erfindung umfaßt die Spannungsüberwachungs-Elektronik 1 zum Erfassen der Versorgungsspannungen $U_{12}$, $U_{22}$ einen im Betrieb einstellbaren ersten Spannungsteiler für die Versorgungsspannung $U_{12}$ und einen im Betrieb einstellbaren zweiten Spannungsteiler für die Versorgungsspannung $U_{22}$. Wie in Fig. 2 dargestellt, ist dazu eine zur Versorgungsspannung $U_{12}$ proportionale Teilspannung $k_1 \cdot U_{12}$ an eine Referenz-Elektroden einer einstellbaren Zener-Diode ZD1 des ersten Spannungsteilers sowie eine zur Versorgungsspannung $U_{22}$ proportionale Teilspannung $k_2 \cdot U_{22}$ an eine Referenz-Elektroden einer einstellbaren Zener-Diode ZD2 des zweiten Spannungsteilers angelegt.

Als einstellbare Zener-Diode ZD1, ZD2 können z.B. einstellbare Präzisions-Zener-Dioden der Firma ZETEX vom Typ ZR431 verwendet werden.

Die Zener-Diode ZD1 ist bevorzugt mittels ihrer Katoden über einen ersten Strombegrenzungswiderstand R1 an ein Potential der Versorgungsspannung $U_{12}$ gelegt; in analoger Weise kann, wie in Fig. 2 dargestellt, die Zener-Dioden ZD2 mittels eines zweiten Strombegrenzungswiderstands R2 an ein Potential der Versorgungsspannung $U_{22}$ geführt sein. Desweiteren sind die Zener-Dioden ZD1, ZD2 katodenseits mit einem dritten bzw. mit einem vierten Strombegrenzungswiderstand R3, R4 verbunden. Ferner umfassen die Mittel 3 zum Getrennthalten von Potentialen im Ausführungsbeispiel gemäß Fig. 2 eine anodenseits mit dem Strombegrenzungswiderstand R3 verbundene dritte sowie eine anodenseits mit dem Strombegrenzungswiderstand R4 verbundene vierte Diode D3, D4. Sowohl die Strombegrenzungswiderstände R3, R4 als auch die Strombegrenzungswiderstände R1, R2 können so ausgewählt werden, das z.B. innerhalb eines Bereichs von 10 kΩ bis 100 kΩ liegen. Falls erforderlich können aber auch sowohl einer der beiden als auch beide Strombegrenzungswiderstände R1, R2 viel größer ausgelegt oder ganz weggelassen werden.

Die beiden Dioden D3, D4 sind desweiteren über ihre jeweilige Kathoden an die Steuerelektrode der Nebenschluß-Elektronik 2 angeschlossen. Letztere weist hierbei bevorzugt wenigstens einen pnp-Bipolar-Transistor im Nebenschluß der Ausgänge 12, 22 auf. Bei voneinander nur gerinfügig verschiedenen Versorgungsspannungen $U_{12}$, $U_{22}$ kann ggf. aber auch auf deren Entkopplung mittels der beiden Dioden D3, D4 verzichtet werden, so daß die Zener-Dioden ZD1, ZD2 via Strombegrenzungswiderstand R3 bzw. R4 praktisch direkt an die Steuerelektrode der Nebenschluß-Elektronik 2 gekoppelt sind.

Im Betrieb der Schaltungsanordnung sind über den Zener-Dioden ZD1, ZD2 zu den Teilspannungen $k_1 \cdot U_{12}$ bzw. $k_2 \cdot U_{22}$ jeweils umgekehrt proportionale Spannungsfälle abgreifbar. Diese werden aufgrund der gemeinsamen Verbindung der Zener-Dioden ZD1, ZD2 an der Steuerelektrode der Nebenschluß-Elektronik 2 wiederum disjunktiv miteinander verküpft, so daß an der Steuerelektrode praktisch eine als analoges Steuersignal y dienende Signalspannung eingestellt wird, die umso niedriger ist, desto höher die Versorgungsspannungen $U_{12}$ und/oder $U_{22}$ sind, mittels dem also signalisiert werden kann inwieweit die Versorgungsspannung $U_{12}$ höher als der Toleranzwert $\Delta U_{12}$ und/oder inwieweit die Versorgungsspannung $U_{22}$ höher als der Toleranzwert $\Delta U_{22}$ eingestellt ist.

Für den Fall, daß die Versorgungsspannungen $U_{12}$, $U_{22}$ höchstens gleich den zugehörigen Toleranzwerten $\Delta U_{12}$ bzw. $\Delta U_{22}$ eingestellt sind, also für einen normalen Betriebsfall, kann ein die Diode ZD1 oder ZD2 durchfließender Steuerstrom einen Betrag von wenigen Mikroampere, z.B. im Bereich von 10 $\mu$A bis 100 $\mu$A, aufweisen; für den oben beschriebenen Fehlerfall kann der Steuerstrom demgegenüber z.B. bis zu 100 mA betragen.

Diese Ausgestaltung der Erfindung hat den besonderen Vorteil, daß aufgrund des als Steuersignals y dienenden, quasi-kontinuierlich fließenden Steuerstroms auch bei kleinen Fehlerspannungen $U_{f12}$, $U_{f22}$ eine Gegenwirkung erzielt wird, die darin besteht, daß die die Fehlerspannungen $U_{f12}$, $U_{f22}$ treibenden Klemmenspannungen $U_{11}$ bzw. $U_{21}$ aufgrund einer üblicherweise begrenzten Leistung der Einspeisungen Q1, Q2 praktisch unverzögert zumindest teilweise wieder abgesenkt werden.

Diese Ausgestaltung der Erfindung hat als weiteren Vorteil, daß im Fehlerfall das Steuersignal y und somit auch der Shuntstrom $I_S$ langsam und kontinuierlich ansteigen können und somit z.B. ein Induzieren weiterer Überspannungen unterdrückt oder vermieden werden kann.

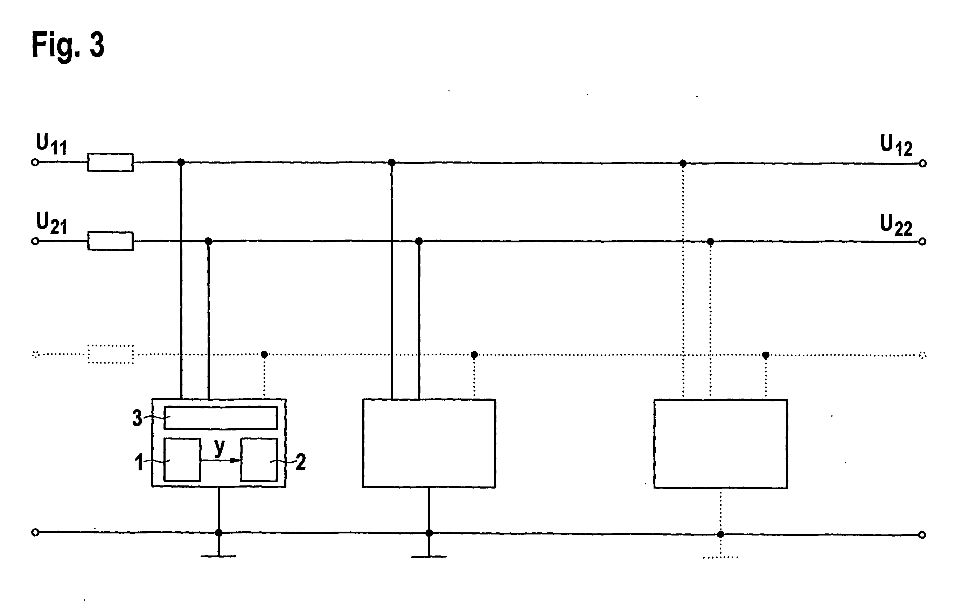

Zu Erhöhung der Redundanz der Spannungsbegrenzung können, wie in Fig. 3 schematisch dargestellt z.B. auch mehrere derartiger Schaltungsanordnungen kaskadiert hintereinander geschaltet. Des weiteren ist können parallel zu den beiden Versorgungsspannungen $U_{12}$, $U_{22}$, wie mittels der punktiert gezeichneten Komponenten schematisiert dargestellt, auch noch weitere solcher Versorgungsspannungen mittels der einer derartigen schaltungsanordnung überwacht und entsprechend mitbegrenzt werden.

## Patentansprüche

1. Schaltungsanordnung zum Überwachen und/oder zum Einstellen wenigstens einer ersten mittels einer ersten Einspeisung (Q1) erzeugten Versorgungsspannung ($U_{12}$) für eine an einem ersten Ausgang (12) der Schaltungsanordnung angeschlossene ersten Verbraucher-Schaltung (V1) und wenigstens einer zweiten mittels einer zweiten Einspeisung (Q2) erzeugten Versorgungsspannung ($U_{22}$) für eine an einem zweiten Ausgang (22) der Schaltungsanordnung angeschlossene zweite Verbraucher-Schaltung (V2), welche Schaltungsanordnung umfaßt:

   - eine auf wenigstens die erste Versorgungsspannung ($U_{12}$) reagierende Spannungsüberwachungs-Elektronik (1) zum Erzeugen eines Steuersignals (y), das signalisiert, ob die erste Versorgungsspannung ($U_{12}$) niedriger als ein zugeordneter erster Toleranzwert ($\Delta U_{12}$) ist und
   - eine Nebenschluß-Elektronik (2), die zumindest zeitweise von einem Shuntstrom ($I_S$) durchflossen ist,
   - wobei der Shuntstrom ($I_S$)

      -- von der ersten und von der zweiten Einspeisung (Q1, Q2) gespeist wird und
      -- zumindest dann durch die Nebenschluß-Elektronik (2) fließt, wenn das Steuersignal (y) signalisiert, daß mindestens die erste Versorgungsspannung ($U_{12}$) größer als der erste Toleranzwert ($\Delta U_{12}$) ist.

2. Schaltungsanordnung nach Anspruch 1,

   - bei der die Spannungsüberwachungs-Elektronik (1) auch auf die wenigstens zweite Versorgungsspannung ($U_{22}$) reagiert und
   - bei der das Steuersignals (y) signalisiert, ob die zweite Versorgungsspannung ($U_{22}$) niedriger als ein zuge-

ordneter zweiter Toleranzwert ($\Delta U_{22}$) ist.

3. Schaltungsanordnung nach Anspruch 1 oder 2, bei der die Nebenschluß-Elektronik (2) wenigstens ein steuerbares Halbleiter-Element (21) umfaßt.

4. Schaltungsanordnung nach Anspruch 3, bei der mittels des Steuersignals (y) eine Leitfähigkeit des Halbleiter-Elements (21) einstellt wird.

5. Schaltungsanordnung nach einem der Ansprüche 1 bis 4, die Mittel (3) zum Getrennthalten von Potentialen der ersten und der zweiten Versorgungsspannungen ($U_{12}$, $U_{22}$) umfaßt.

6. Schaltungsanordnung nach einem der Ansprüche 1 bis 5, bei der die erste Einspeisung (Q1)

- eine erste Klemmenspannung ($U_{11}$) zum Einstellen der ersten Versorgungsspannung ($U_{12}$) liefert und
- auf ein Ansteigen des Shuntstroms ($I_S$) mit einem Absenken der ersten Klemmenspannung ($U_{11}$) reagiert.

7. Schaltungsanordnung nach einem der Ansprüche 1 bis 6, bei der das Steuersignal (y) signalisiert, inwieweit die erste Versorgungsspannung ($U_{12}$) höher als der erste Toleranzwert ($\Delta U_{12}$) ist.

8. Schaltungsanordnung nach einem der Ansprüche 1 bis 7, bei der wenigstens die erste Verbraucherschaltung (V1) von intrinsischer und/oder erhöhter Sicherheit ist.

**Claims**

1. Circuit arrangement for monitoring and/or adjusting at least a first supply voltage ($U_{12}$), generated with a first infeed (Q1), for a first consumer circuit (V1), connected to a first output (12) of the circuit arrangement, and at least a second supply voltage ($U_{22}$), generated with a second infeed (Q2), for a second consumer circuit (V2), connected to a second output (22) of the circuit arrangement,
said circuit arrangement comprising:

- voltage monitoring electronics (1), which react to at least the first supply voltage ($U_{12}$), for generating a control signal (y) which signalizes whether the first supply voltage ($U_{12}$) is lower than a first tolerance value ($\Delta U_{12}$) assigned and
- shunt electronics (2) through which a shunt current ($I_S$) flows at least some of the time,
- where the shunt current ($I_S$)

-- is fed by the first and second infeed (Q1, Q2)
-- at least then flows through the shunt electronics (2) when the control signal (y) signalizes that at least the first supply voltage ($U_{12}$) is greater than the first tolerance value ($\Delta U_{12}$).

2. Circuit arrangement as per Claim 1,

- where the voltage monitoring electronics (1) also react to the at least second supply voltage ($U_{22}$) and
- where the control signal (y) signalizes whether the second supply voltage ($U_{22}$) is lower than a second tolerance value ($\Delta U_{22}$) assigned.

3. Circuit arrangement as per Claim 1 or 2, where the shunt electronics (2) comprises at least a controllable semi-conductor element (21).

4. Circuit arrangement as per Claim 3, where a conductivity of the semi-conductor element (21) is set using the control signal (y).

5. Circuit arrangement as per one of the Claims 1 to 4, which comprises a means (3) for keeping potentials of the first and second supply voltages ($U_{12}$, $U_{22}$) separate.

6. Circuit arrangement as per one of the Claims 1 to 5, where the first infeed (Q1)

- provides a first terminal voltage ($U_{11}$) for adjusting the first supply voltage ($U_{12}$) and
- reacts to a rise in the shunt current ($I_S$) with a reduction in the first terminal voltage ($U_{11}$).

7. Circuit arrangement as per one of the Claims 1 to 6, where the control signal signalizes to what extent the first supply voltage ($U_{12}$) is higher than the first tolerance value ($\Delta U_{12}$).

8. Circuit arrangement as per one of the Claims 1 to 7, where at least the first consumer circuit (V1) is of intrinsic and/or increased safety.

**Revendications**

1. Circuit de commutation destiné à la surveillance et/ou au réglage d'au moins une première tension d'alimentation ($U_{12}$) générée au moyen d'une première alimentation (Q1), tension destinée à un premier circuit utilisateur (V1) raccordé à une première sortie (12) du circuit de commutation, et d'au moins une deuxième tension d'alimentation ($U_{22}$) générée au moyen d'une deuxième alimentation (Q2), tension destinée à un deuxième circuit utilisateur (V2) raccordé à une deuxième sortie (22) du circuit de commutation, lequel circuit de commutation comprend :

   - une électronique de surveillance de tension (1) réagissant au moins à la première tension d'alimentation ($U_{12}$), destinée à la génération d'un signal de commande (y), qui signale si la première tension d'alimentation ($U_{12}$) est inférieure à une première valeur de tolérance ($\Delta U_{12}$) attribuée et
   - une électronique en circuit dérivé (2), qui est parcourue au moins temporairement par un courant dérivé ($I_S$),
   - pour lequel le courant dérivé ($I_S$)

      -- est alimenté par la première et la deuxième alimentation (Q1, Q2) et
      -- circule à travers l'électronique en circuit dérivé (2) au moins lorsque le signal de commande (y) signale qu'au moins la première tension d'alimentation ($U_{12}$) est supérieure à la première valeur de tolérance ($\Delta U_{12}$).

2. Circuit de commutation selon la revendication 1,

   - pour lequel l'électronique de surveillance de tension (1) réagit également à la deuxième tension d'alimentation ($U_{22}$) et
   - pour lequel le signal de commande (y) signale si la deuxième tension d'alimentation ($U_{22}$) est inférieure à la deuxième valeur de tolérance ($\Delta U_{22}$) attribuée.

3. Circuit de commutation selon la revendication 1 ou 2, pour lequel l'électronique en circuit dérivé (2) comprend au minimum un élément semi-conducteur (21) réglable.

4. Circuit de commutation selon la revendication 3, pour lequel une conductibilité de l'élément semi-conducteur (21) est réglée au moyen du signal de commande (y).

5. Circuit de commutation selon la revendication 1 à 4, qui comprend des moyens (3) destinés au maintien de la séparation de potentiels de la première et de la deuxième tension d'alimentation ($U_{12}$, $U_{22}$).

6. Circuit de commutation selon la revendication 1 à 5, pour lequel la première alimentation (Q1)

   - fournit une première tension de borne ($U_{11}$) destinée au réglage de la première tension d'alimentation ($U_{12}$) et
   - réagit à une augmentation du courant dérivé ($I_S$) par une diminution de la première tension de borne ($U_{11}$).

7. Circuit de commutation selon la revendication 1 à 6, pour lequel le signal de commande (y) signale dans quelle mesure la première tension d'alimentation ($U_{12}$) est supérieure à la première valeur de tolérance ($\Delta U_{12}$).

8. Circuit de commutation selon la revendication 1 à 7, pour lequel au moins le premier circuit utilisateur (V1) est de sécurité intrinsèque et/ou de sécurité augmentée.

Fig. 1

EP 1 327 290 B1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4589049 A
- US 4849845 A